# EUROPÄISCHE PATENTSCHRIFT

(11) **EP 1 862 721 B1**
(45) Veröffentlichungstag und Bekanntmachung des Hinweises auf die Patenterteilung: **22.04.2009**
(21) Anmeldenummer: 07006345.8
(22) Anmeldetag: 28.03.2007
(51) Int. Cl.: F16L 39/06

(54) **Vorrichtung zum Zu- bzw. Abführen von einem oder mehreren Medien zu einem rotierenden Maschinenbauteil**
Device for feeding or discharging one or more media to a rotating machine part
Dispositif destiné à la conduite ou le départ d'un ou plusieurs milieux destinés à un composant de machine rotatif

(30) Priorität: 01.06.2006 DE 102006025494
(43) Veröffentlichungstag der Anmeldung: 05.12.2007
(73) Patentinhaber: Christian Maier GmbH & Co. KG Maschinenfabrik, 89520 Heidenheim (DE)
(72) Erfinder: Frey, Christoph, 89564 Nattheim (DE)
(74) Vertreter: Dziewior, Joachim

(56) Entgegenhaltungen:
- WO-A-01/92684
- DE-A1- 4 439 137
- DE-U1-8202005 003 74

## Beschreibung

Die Erfindung betrifft eine Vorrichtung zum Zu- bzw. Abführen von einem oder mehreren Medien zu einem rotierenden Maschinenbauteil, insbesondere einem Drucksystem, bestehend aus einem Dichtkopfgehäuse sowie einem im Inneren des Dichtkopfgehäuses angeordneten Rotor, die beide gegenseitig zueinander drehbar gelagert sind, wobei das Dichtkopfgehäuse und der Rotor mit Zulauf- und Ablauföffnungen für das Medium bzw. die Medien versehen sind, die über im Innern des Rotors verlaufende Verbindungsleitungen sowie über jeweils einen im Bereich zwischen Dichtkopfgehäuse und Rotor angeordneten Ringraum miteinander in Verbindung stehen, ferner mit wenigstens einer Dichtung, vorzugsweise Gleitringdichtung, die einseitig oder jeweils beidseits der Ringräume den Rotor gegen das Dichtkopfgehäuse abdichten (DE 202005003748 U1).

Nachteilig bei diesen bekannten Vorrichtungen ist, dass der zur Verfügung stehende Querschnitt des Rotors nicht optimal ausgenutzt wird, wenn Verbindungsleitungen mit maximal möglicher Querschnittsfläche für einen hohen Mediendurchsatz benötigt werden. In der Regel muss hierfür der Durchmesser des Rotors vergrößert werden, was einerseits kostenaufwendig ist und darüberhinaus wegen höherer Umfangsgeschwindigkeiten zu einem größeren Verschleiß der Dichtteile führt.

Der Erfindung liegt die Aufgabe zugrunde, eine Vorrichtung der eingangs genannten Art so zu verbessern, dass der zur Verfügung stehende Rotorquerschnitt von den Verbindungsleitungen optimaler genutzt werden kann.

Diese Aufgabe wird mit den Merkmalen nach Anspruch 1 gelöst.

Der durch die Erfindung erreichte Vorteil besteht im wesentlichen darin, dass durch die kreisausschnittsförmige Querschnittsgestalt der Verbindungsleitungen die Rotorquerschnittsfläche optimaler genutzt werden kann, so dass - bei gleicher effektiver Gesamtquerschnittsfläche der Verbindungsleitungen - der Durchmesser des Rotors deutlich verkleinert werden kann. Hierdurch läßt sich nicht nur eine Materialersparnis erreichen, sondern darüber hinaus ein verringerter Verschleiß der den Rotor gegen das Dichtkopfgehäuse abdichtenden Dichtungen.

In bevorzugter Ausführungsform der Erfindung ist vorgesehen, dass die kreisauschnittsförmigen Verbindungsleitungen den vollen Kreiswinkel des Rotors von 360° nutzen. Sind also nur zwei Verbindungsleitungen für den Zu- bzw. Abtransport eines Mediums vorgesehen, so haben diese eine etwa halbkreisförmige Querschnittsfläche; bei zwei Medien, also vier Verbindungsleitungen besitzen diese dagegen die Gestalt eines Viertelkreises, sofern alle Leitungen untereinander eine gleiche Querschnittsfläche aufweisen sollen.

Grundsätzlich können für eine Optimierung der Durchlassquerschnitte die Trennwände wie auch die Wand des Rotors relativ dünn gestaltet werden; im Rahmen der Erfindung ist jedoch vorgesehen, dass die Dicke der Trennwände den in den Verbindungsleitungen auftretenden Drücken angepasst ist.

Weiter ist in diesem Zusammenhang von Vorteil, wenn die durch den Kreisausschnittswinkel bestimmte Querschnittsfläche der Verbindungsleitung dem Fördervolumen des jeweiligen Mediums angepasst ist.

Um die Vorrichtung ohne weiteres an konventionelle Maschinenbauteile ankoppeln zu können, die üblicherweise beispielsweise mit kreisrunden Flanschen versehen sind, ist im Rahmen der Erfindung vorgesehen, dass der Rotor mit einem Übergangsstück von diesem gegenüber größeren Durchmesser versehen ist, in welchem die Verbindungsleitungen von ihrem kreisausschnittförmigen Querschnitt in einem kreisrunden Querschnitt übergehen.

Der Übergang auf einen größeren Durchmesser ist im Bereich des Übergangsstückes ohne Bedeutung, da dort keine Dichtungen oder ähnliche, dem Verschleiß unterliegende Teile mehr vorhanden sind.

Um das Auftreten von Druckverlusten zu vermeiden, bleibt die effektive Querschnittsfläche im Übergangsstück unverändert. Dieser Übergangsbereich kann darüber hinaus so gestaltet sein, dass möglichst keine Strömungsverluste durch Wirbelbildung oder ähnliches auftreten.

Desweiteren wird im Rahmen der Erfindung vorgeschlagen, dass die Ringräume im Rotor angeordnet sind.

Schließlich hat es sich der besonderen Formgebung wegen als zweckmäßig herausgestellt, wenn der Rotor als Gußteil ausgebildet ist.

Im folgenden wird die Erfindung an einem in der Zeichnung dargestellten Ausführungsbeispiel näher erläutert; es zeigen:

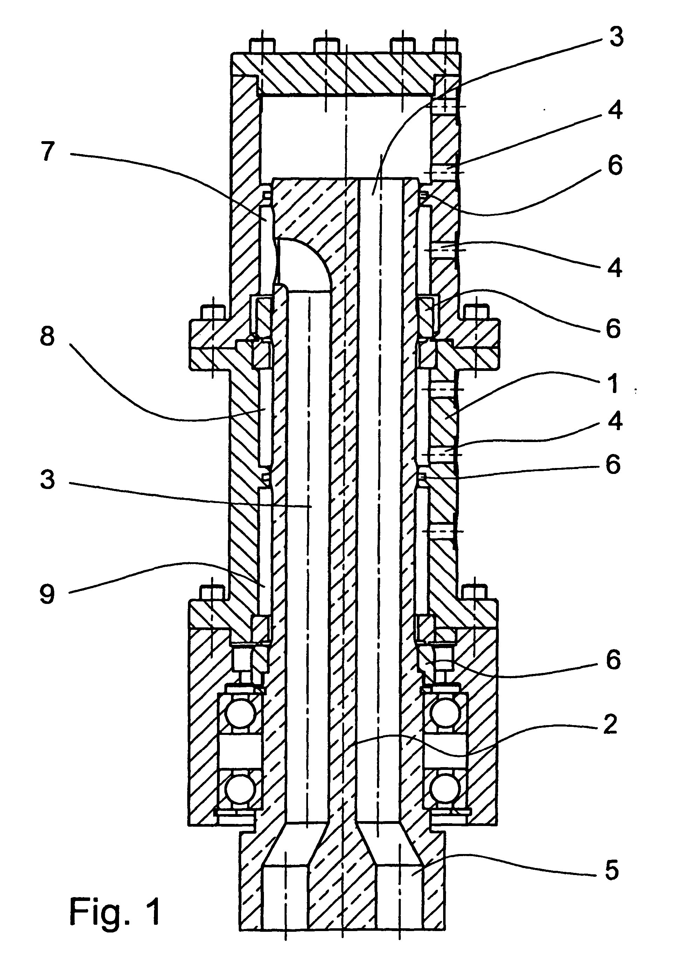

- Fig. 1: eine Vorrichtung nach der Erfindung in Seitenansicht,

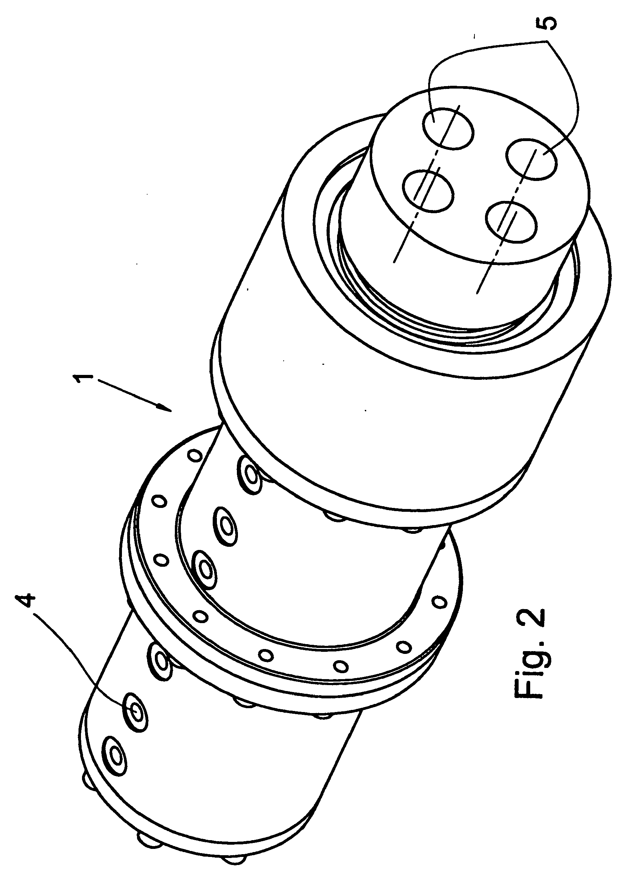

- Fig. 2: eine perspektivische Darstellung des Gegenstands nach Fig. 1,

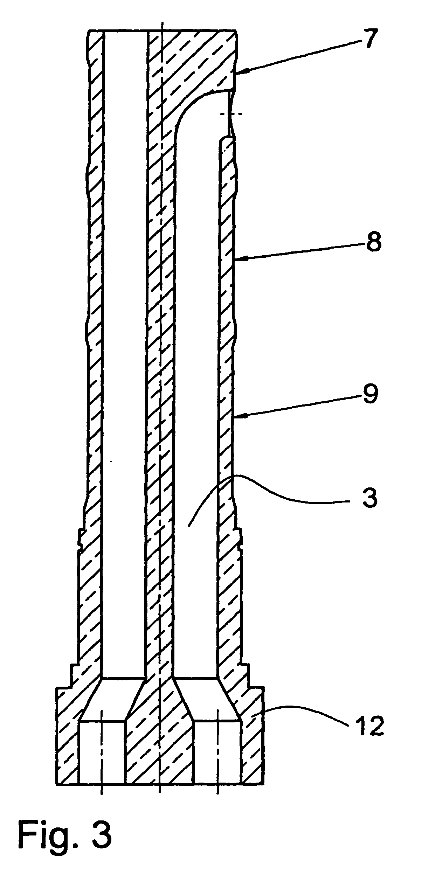

- Fig. 3: einen Längsschnitt durch den Rotor,
- Fig. 4: einen Querschnitt durch den Rotor.

Die in der Zeichnung dargestellte Vorrichtung dient zum Zu- bzw. Abführen von einem oder mehreren Medien zum einen in der Zeichnung nicht näher dargestellten rotierenden Maschinenbauteil. Hierbei kann es sich insbesondere um ein Drucksystem handeln. Im einzelnen besteht die Vorrichtung aus einem Dichtkopfgehäuse 1 sowie einen im inneren des Dichtkopfgehäuses 1 angeordneten Rotor 2. Das Dichtkopfgehäuse 1 sowie der Rotor 2 sind beide gegenseitig zueinander drehbar gelagert, wobei üblicherweise das Dichtkopfgehäuse 1 feststeht und der Rotor 2 rotierend mit dem Maschinenbauteil verbunden ist.

Sowohl das Dichtkopfgehäuse 1 wie auch der Rotor 2 sind mit Zulauf- und Ablauföffnungen 4, 5 für das Medium bzw. die Medien versehen, die über im Inneren verlaufende Verbindungsleitungen 3 sowie über jeweils einen im Bereich zwischen Dichtkopfgehäuse 1 und Rotor 2 angeordneten Ringraum 7, 8, 9 miteinander in Verbindung stehen. Die einzelnen Ringräume 7, 8, 9 sind über Dichtungen 6, vorzugsweise Gleitringdichtungen voneinander getrennt, wobei die Dichtungen 6 jeweils den Rotor 2 gegen das Dichtkopfgehäuse 1 abdichten.

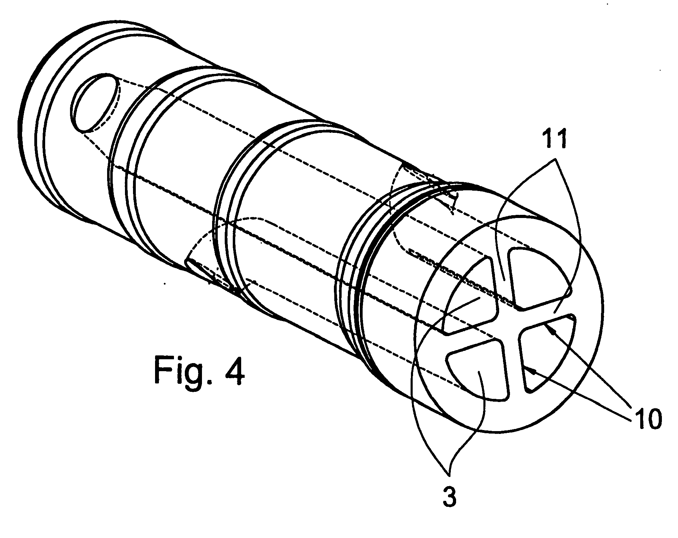

Wie sich insbesondere aus der Fig. 4 ersehen lässt, weisen die Verbindungsleitungen 3 im Querschnitt die Form von Kreisausschnitten auf, wobei die radial verlaufenden Wandflächen 10 zweier aneinander grenzender Verbindungsleitungen 3 zwischen sich eine Trennwand 11 von homogener Dicke bilden.

Im einzelnen sind die kreisausschnittsförmigen Verbindungsleitungen 3 so ausgebildet, dass sie den vollen Kreiswinkel des Rotors 2 von 360° nutzen. Die Dicke dieser Trennwände 11 ist dabei jeweils an die in den Verbindungsleitungen 3 auftretenden Drücke angepasst.

Ferner ist auch die durch den Kreisausschnittswinkel bestimmte Querschnittsfläche der Verbindungsleitung 3 dem Fördervolumen des jeweiligen Mediums angepasst. Ein Medium mit höherem Durchsatz wird daher in einer Verbindungsleitung 3 mit einem größeren Kreisausschnittswinkel transportiert als ein Medium mit geringem Fördervolumen.

Um den Übergang vom Rotor 2 zu einem konventionellen Maschinenbauteil zu erleichtern, das üblicherweise mit runden Flanschanschlüssen versehen ist, weist der Rotor 2 ein Übergangsstück 12 von diesem gegenüber größerem Aussendurchmesser auf, in welchem die Verbindungsleitungen 3 von ihrem kreisausschnittsförmigen Querschnitt in einen kreisrunden Querschnitt übergehen. Um hierbei Druckverluste zu vermeiden, ist das Übergangsstück 12 so ausgebildet, dass die Querschnittsfläche der Verbindungsleitungen 3 unverändert bleibt.

Wie sich weiter aus der Zeichnung ergibt, sind die Ringräume 7, 8, 9 im Gehäuse 1 und/oder im Rotor 2 angeordnet.

Im Hinblick auf die komplexere Formgestaltung des Rotors 2 wird dieser zweckmäßigerweise als Gußteil gefertigt.

## Patentansprüche

1. Vorrichtung zum Zu- bzw. Abführen von einem oder mehreren Medien zu einem rotierenden Maschinenbauteil, insbesondere einem Drucksystem, bestehend aus einem Dichtkopfgehäuse (1) sowie einem im Inneren des Dichtkopfgehäuses (1) angeordneten Rotor (2), die beide gegenseitig zueinander drehbar gelagert sind, wobei das Dichtkopfgehäuse (1) und der Rotor (2) mit Zulauf- und Ablauföffnungen (4,5) für das Medium bzw. die Medien versehen sind, die über im Innern des Rotors (2) verlaufende Verbindungsleitungen (3) sowie über jeweils einen im Bereich zwischen Dichtkopfgehäuse (1) und Rotor (2) angeordneten Ringraum (7,8,9) miteinander in Verbindung stehen, ferner mit wenigstens einer Dichtung (6), vorzugsweise Gleitringdichtung, die einseitig oder jeweils beidseits der Ringräume (7,8,9) den Rotor (2) gegen das Dichtkopfgehäuse (1) abdichtet, **dadurch gekennzeichnet, daß** die Verbindungsleitungen (3) im Querschnitt die Form von Kreisausschnitten aufweisen, wobei die radial verlaufenden wandflächen (10) zweier aneinandergrenzender Verbindungsleitungen (3) zwischen sich eine Trennwand (11) von homogener Dicke bilden und daß der Rotor (2) mit einem Übergangsstück (12) von diesem gegenüber größerem Außendurchmesser versehen ist, in welchem die Verbindungsleitungen (3) von ihrem kreisausschnittförmigen Querschnitt in einen kreisrunden Querschnitt übergehen, wobei die effektive Querschnittsfläche im Übergangsstück (12) unverändert bleibt.

2. Vorrichtung nach Anspruch 1, **dadurch gekennzeichnet, daß** die kreisausschnittförmigen Verbindungsleitungen (3) den vollen Kreiswinkel des Rotors (2) von 360° nutzen.

3. Vorrichtung nach Anspruch 1 oder 2, **dadurch gekennzeichnet, daß** die Dicke der Trennwände (11) den in den Verbindungsleitungen (3) auftretenden Drücken angepaßt sind.

4. Vorrichtung nach einem der Ansprüche 1 bis 3, **dadurch gekennzeichnet, daß** die durch den Kreisausschnittswinkel bestimmte Querschnittsfläche der Verbindungsleitung (3) dem Fördervolumen des jeweiligen Mediums angepaßt ist.

5. Vorrichtung nach einem der Ansprüche 1 bis 6, **dadurch gekennzeichnet, daß** die Ringräume (7, 8, 9) im Gehäuse (1) und/oder im Rotor (2) angeordnet sind.

6. Vorrichtung nach einem der Ansprüche 1 bis 7, **dadurch gekennzeichnet, daß** der Rotor (2) als Gußteil ausgebildet ist.

## Claims

1. Apparatus for feeding or discharging one or more media to a rotating machine component, in particular a pressure system, comprising a sealing head housing (1) and a rotor (2) arranged in the interior of the sealing head housing (1), which are both mounted mutually rotatably relative to each other, wherein the sealing head housing (1) and the rotor (2) are provided with feed and outlet openings (4, 5) for the medium or media, which are in communication with each other by way of connecting conduits (3) extending in the interior of the rotor (2) and by way of a respective annular space (7, 8, 9) arranged in the region between the sealing head housing (1) and the rotor (2), and further comprising at least one seal (6), preferably a sliding ring seal, which at one side or at both respective sides of the annular spaces (7, 8, 9) seals the rotor (10) relative to the sealing head housing (1), **characterised in that** the connecting conduits (3) in cross-section are in the shape of sectors of a circle, wherein the radially extending wall surfaces (10) of two mutually adjoining connecting conduits (3) form between them a partition (11) of homogeneous thickness and that the rotor (2) is provided with a transitional portion (12) of larger outside diameter than same, in which the connecting conduits (3) go from their cross-section in the shape of sectors of a circle into a round cross-section, the effective cross-sectional area in the transitional portion (12) remaining unchanged.

2. Apparatus according to claim 1 **characterised in that** the connecting conduits (3) in the shape of sectors of a circle use the full circular angle of the rotor (2) of 360°.

3. Apparatus according to claim 1 or claim 2 **characterised in that** the thickness of the partitions (11) is adapted to the pressures occurring in the connecting conduits (3).

4. Apparatus according to one of claims 1 to 3 **characterised in that** the cross-sectional area of the connecting conduit (3), said area being determined by the angle of the sectors of the circle, is adapted to the delivery volume of the respective medium.

5. Apparatus according to one of claims 1 to 6 **characterised in that** the annular spaces (7, 8, 9) are arranged in the housing (1) and/or in the rotor (2).

6. Apparatus according to one of claims 1 to 7 **characterised in that** the rotor (2) is in the form of a casting.

## Revendications

1. Dispositif d'admission et d'évacuation d'un ou plusieurs fluides pour un composant de machine rotatif, en particulier un système sous pression, constitué d'un carter de tête étanche (1) et d'un rotor (2) disposé à l'intérieur du carter de tête étanche (1), ces deux éléments étant montés avec possibilité de rotation l'un par rapport à l'autre, le carter de tête étanche (1) et le rotor (2) étant pourvus d'orifices d'arrivée et de sortie (4, 5) pour le fluide ou les fluides, qui communiquent entre eux via des conduites de liaison (3), s'étendant à l'intérieur du rotor (2), et via un espace annulaire (7, 8, 9) qui est prévu respectivement dans la région entre le carter de tête étanche (1) et le rotor (2), le dispositif comprenant en outre au moins un joint d'étanchéité (6), de préférence une garniture étanche à anneau glissant, qui établit l'étanchéité du rotor (2) vis-à-vis du carter de tête étanche (1), sur un côté ou sur les deux côtés des espaces annulaires (7, 8, 9), **caractérisé par le fait que** les conduites de liaison (3) présentent en section transversale la forme de secteurs de cercle, les surfaces de paroi (10) radiales de deux conduites de liaison (3) adjacentes formant entre elles une cloison de séparation (11) d'épaisseur homogène, et **par le fait que** le rotor (2) est muni d'une partie de transition (12) dont le diamètre extérieur est supérieur à celui du rotor et dans laquelle les conduites de liaison (3) passent de leur section en forme de secteur de cercle à une section circulaire, l'aire de section effective dans la partie de transition (12) restant inchangée.

2. Dispositif selon la revendication 1, **caractérisé par le fait que** les conduites de liaison (3) en forme de secteurs de cercle utilisent la totalité de l'angle de cercle du rotor (2), qui est de 360°.

3. Dispositif selon la revendication 1 ou 2, **caractérisé par le fait que** l'épaisseur des cloisons de séparation (11) est adaptée aux pressions régnant dans les conduites de liaison (3).

4. Dispositif selon une des revendications 1 à 3, **caractérisé par le fait que** l'aire de section de la conduite de liaison (3), qui est définie par l'angle de secteur de cercle, est adaptée au volume déplacé du fluide respectif.

5. Dispositif selon une des revendications 1 à 6, **caractérisé par le fait que** les espaces annulaires (7, 8, 9) sont aménagés dans le carter (1) et/ou dans le rotor (2).

6. Dispositif selon une des revendications 1 à 7, **caractérisé par le fait que** le rotor (2) est réalisé sous forme de pièce moulée en fonte.
